Europäisches Patentamt

(19) European Patent Office

Office européen des brevets

(11) Publication number: **0 117 605**
**B1**

## (12) EUROPEAN PATENT SPECIFICATION

(45) Date of publication of the patent specification:
27.08.86

(51) Int. Cl.⁴: **B 01 J 13/02**, B 41 M 5/00

(21) Application number: **84300195.9**

(22) Date of filing: **13.01.84**

(54) **A process for manufacturing minute capsules.**

(30) Priority: **24.01.83 US 460704**

(43) Date of publication of application:
**05.09.84 Bulletin 84/36**

(45) Publication of the grant of the patent:
**27.08.86 Bulletin 86/35**

(84) Designated Contracting States:
**AT BE CH DE FR GB IT LI LU NL SE**

(56) References cited:
**EP - A - 0 070 528**
**FR - A - 2 277 621**
**GB - A - 2 062 570**
**US - A - 4 100 103**

(73) Proprietor: **APPLETON PAPERS INC., P.O.
Box 359 825 East Wisconsin Avenue, Appleton
Wisconsin 54912 (US)**

(72) Inventor: **Brown, Robert W., 91 Esterbrook Court,
Appleton Wisconsin 54915 (US)**
Inventor: **Bowman, Richard P., 1614 E. Harding Dr. Apt. 8,
Appleton Wisconsin 54915 (US)**

(74) Representative: **Norris, Richard John et al, The Wiggins
Teape Group Limited Group Patents Departement
Butlers Court, Beaconsfield Buckinghamshire HP9 1RT
(GB)**

## Description

The present invention relates to a process for manufacturing minute capsules having walls of urea or melamine formaldehyde polymeric materials. The capsules are particularly but not exclusively for use in pressure-sensitive copying materials.

One type of pressure-sensitive copying system is disclosed in U.S. Patent No. 2,730,456 and is commonly referred to as a manifold copying system. This manifold copying system comprises an upper sheet coated on its lower surface with microcapsules containing a solution of a colourless chromogenic material, and a lower sheet coated on its upper surface with a colour developing coreactant material, e.g. an acidic clay, a phenolic resin or certain organic salts. When more than two plies are required in the record material to produce a greater number of copies, a number of intermediate sheets are also provided, each of which is coated on the lower surface with microcapsules containing colourless chromogenic material and on the upper surface with the colour developing coreactant material. Pressure exerted on the sheets by writing or typing ruptures the microcapsules, thereby releasing the chromogenic material solution on to the coreactant material on the next lower sheet and giving rise to a chemical reaction which develops the colour of the chromogenic material.

Another type of pressure-sensitive copying system is known as a self-contained system and is disclosed in U.S. Patent Nos. 2,730,457 and 4,197,346. Microcapsules containing a chromogenic material solution and a coreactant material are coated on the same surface of a sheet of paper. Pressure exerted on the sheet by writing or typing causes the capsules to rupture and release the chromogenic material, which then reacts with the coreactant material on the sheet to produce a colour.

Microcapsules for use in the above-described pressure-sensitive copying systems have a series of stringent property requirements so as to produce an optimum copying system. Some of these properties are capsule strength, colour, size distribution range and wall integrity (impermeability).

Several methods for the manufacture of capsules, having walls wholly or partly of urea or melamine formaldehyde polymeric material, have been proposed in the art. For example U.S. Patent No. 4,001,140, 4,087,376 and 4,089,802 disclose a method of encapsulating by an in situ reaction of urea and formaldehyde or a polycondensation of monomeric or low molecular weight polymers of dimethylol urea or methylated dimethylol urea in an aqueous vehicle conducted in the presence of negatively-charged, carboxyl-substituted, linear aliphatic hydrocarbon polyelectrolyte material dissolved in the vehicle.

U.S. Patent No. 4,100,103 discloses a method of encapsulating by an in situ reaction of melamine and formaldehyde or a polycondensation of monomeric or low molecular weight polymers of methylol melamine or etherified methylol melamine in an aqueous vehicle conducted in the presence of negatively-charged, carboxyl-substituted linear aliphatic hydrocarbon polyelectrolyte material dissolved in the vehicle.

British Patent No. 2,062,570, published May 28, 1981, discloses a process for producing microcapsules having walls produced by polymerization of melamine and formaldehyde in the presence of a styrenesulphonic acid polymer which becomes incorporated in the system. Other anionic high molecular electrolytes, such as polyacrylic acid, are disclosed for use in combination with the styrenesulphonic acid polymer. This same disclosure teaches that the styrenesulphonic acid polymer is present as 67-100% by weight of the mixture of the styrene sulphonic acid polymer and the anionic high molecular electrolyte.

The processes according to U.S. Patent Nos. 4,001,140, 4,087,376, 4,089,802 and 4,100,103 have been successfully used to encapsulate solutions of chromogenic materials for use in pressure-sensitive copying papers. Of the eligible carboxyl-substituted polyelectrolytes disclosed in said patents, the hydrolyzed maleic anhydride copolymers are preferred. Among the hydrolyzed maleic anhydride copolymers disclosed, the most preferred is poly(ethylene-co-maleic anhydride) (hereinafter referred to as EMA) because of the balance of properties provided to the encapsulation processes.

The cost of EMA has recently been rising rapidly, producing a consequent rise in the cost of the microcapsules manufactured by processes in which EMA constitutes the carboxyl-substituted polyelectrolyte. Because of cost and availability considerations, poly(acrylic acid) (hereinafter referred to as PAA), is a logical substitute for EMA as the carboxyl-substituted polyelectrolyte. While microcapsules made from processes according to U.S. Patent Nos. 4,001,140 and 4,100,103, in which PAA constitutes the polyelectrolyte, are of commercial quality for use in pressure-sensitive copying paper, they do not possess the optimum balance of properties obtained when EMA is utilized.

One function of the polyelectrolyte in said patents is to take an active part in the control or moderation of the polymerization reaction of the starting materials used to form the condensation polymer which makes up the resulting capsule walls.

Another function of the polyelectrolyte is to act as an emulsifying agent to promote and maintain the separation of the individual droplets of the intended capsule core material in the aqueous manufacturing vehicle. When PAA is utilized as the polyelectrolyte, amulsification of the intended capsule core material requires more energy input and time and produces a poorer drop size distribution than when EMA is employed. The poorer emulsifying power of PAA can be offset in the case of the process of U.S. Patent No. 4,100,103 by mixing in, prior to emulsification, the starting materials (e.g. methylated methylol melamine) employed in the in situ polymerization reaction to form the condensation polymer which makes up the resulting capsule walls. The presence of methylated methylol melamine or a low molecular weight polymer thereof, (hereinafter referred to as MMM) during the intended core material emulsification step can result in the premature polymerization of the MMM. This tendency of the MMM to prematurely react under these circumstances is reduced by raising the pH of the PAA-MMM solution to the highest level at which emulsification of the intended core material can be obtained. Once a satisfactory intended core material emulsion is obtained, the pH of the emulsion must be reduced in order to obtain the deposition of satisfactory capsule walls in a reasonable amount of time. This process has been further improved by the addition of certain salts as disclosed in our European Patent Application No. 0092356A.

It is an object of the present invention to provide a capsule manufacturing process wherein emulsion of intended capsule core material of improved drop size distribution is produced.

It is another object of the present invention to provide a capsule manufacturing process wherein the emulsion of intended capsule core material possesses improved resistance to destabilization resulting from the addition of aminoplast precondensate intended capsule wall materials to the manufacturing system.

It has now been found that progress towards these objects may be achieved and unexpected benefits produced if the processes generally disclosed in U.S. Patent Nos. 4,001,140, 4,087,376, 4,089,802 and 4,100,103 are practiced using PAA as the polyelectrolyte in combination with polystyrene sulphonic acid or a salt thereof (hereinafter referred to as PSA) in which combination the amount of PSA is about 6% to about 50% by weight of the PAA/PSA mixture. Improved emulsification of intended capsule core material and an unexpected resistance of said emulsion to destabilization due to the presence of aminoplast precondensate intended capsule wall materials are thus two of the principal benefits. Additionally, the completed microcapsule slurries possess lower viscosities which has benefit in transferring and coating said slurries. The minimum required amount of PSA is based upon the presence of sufficient PSA to provide the improved emulsification. Above the maximum preferred amount of PSA, the resistance of the emulsion to destabilization tends to be unacceptably lowered.

According to a first aspect of the present invention there is provided a process for manufacturing minute capsules comprising the steps of

(a) establishing a dispersion of particles or droplets of a substantially insoluble capsule nucleus material in an aqueous manufacturing vehicle containing:

(i) a capsule wall precursor material selected from melamine and formaldehyde, methylol melamine, methylated methylol melamine, urea and formaldehyde, dimethylol urea or methylated dimethylol urea or any combination thereof, and (ii) a mixture of poly(acrylic acid) and polystyrene sulphonic acid or a polystyrene sulphonic acid salt; and

(b) forming polymeric shells individually surrounding the particles of capsule nucleus material from the capsule wall precursor material by an in situ polymerization characterised in that the polystyrene sulphonic acid or salt is present in an amount in the range 6 to 50 percent by weight based on the weight of the mixture of the poly(acrylic acid) and the polystyrene sulphonic acid or salt.

According to a second aspect of the present invention there is provided a sheet material carrying minute capsules manufactured according to the process of the present invention.

The particular capsule wall precursor materials used to form the condensation polymer which makes up the resulting capsule walls may be as described in U.S. Patent Nos. 4,001,140, 4,087,376, 4,089,802 and 4,100,103. Similarly the procedures used in the present process may be generally as described in those patents. Preferably the amount of PSA in the mixture of PAA and PSA is in the range of about 20% to about 40% by weight of the PAA/PSA mixture. More preferably the amount of PSA is about 30% by weight of the PAA/PSA mixture.

The process is operable over a wide range of temperatures but a temperature range of about 40°C to about 95°C is preferred. More preferred is the temperature range of about 50°C to about 70°C.

Under certain circumstances the inclusion of one of the salts disclosed in the aforementioned European Patent Application No. 0092356A provides a further improvement in the wall integrity of the resulting microcapsule. However, the use of such salts is not required to practice and demonstrate the beneficial properties of the claimed invention.

The present invention will now be illustrated by reference to the following examples in which all parts and percentages are by weight, all solutions are aqueous unless otherwise specified, and trade marks are indicated by an asterisk.

The intended capsule nucleus material for all of the following examples was a solution of chromogenic compounds as shown in Table I or Table II.

*Table I*

| Concentration | Chromogenic Material |
|---|---|
| 1.7% | 3,3-bis(p-dimethylaminophenyl)- -6-dimethylaminophthalide |
| 0.55% | 2'-anilino-3'-methyl-6'-diethyl- aminofluoran |
| 0.55% | 3,3-bis(1-ethyl-2-methylindol-3- -yl)phthalide |

The solvent for the preceding chromogenic compound solution was a mixture of 65 parts of a $C_{10}$-$C_{13}$ alkylbenzene and 35 parts of benzylated xylenes (U.S. Patent No. 4,130,299).

*Table II*

| Concentration | Chromogenic Material |
|---|---|
| 1.0% | 3,3-bis(p-dimethylaminophenyl)- -6-dimethylaminophthalide |
| 1.0% | Pyridyl Blue (U.S. Patent No. 4,275,905, Column 2, lines 62-66) |
| 0.6% | 3,3-bis(1-ethyl-2-methylindol-3- -yl)phthalide |

The solvent for the above chromogenic compound solution was a mixture of 80 parts of a $C_{10}$-$C_{13}$ alkylbenzene and 20 parts of sec-butylbiphenyl (U.S. Patent No. 4,287,074).

### Example 1

In this Example a solution made of the following components was adjusted to pH 4.0 with a 20% sodium hydroxide solution.

28 grams PAA («Acrysol A-3»*, 25% solids; molecular weight less than 150,000; Rohm and Hass Co.)

10 grams PSA («Versa-TL 71»*, 30% solids; polystyrene sulphonic acid; molecular weight 70,000; National Starch and Chemical Corp.)

212 grams water

Into 200 grams of the above solution were emulsified 180 grams of the chromogenic compound solution of Table I to yield a drop size range of about 15 microns and less. To the remaining portion of the PAA/PSA solution were added 25 grams of partially methylated methylol melamine resin («Resimene 714»*, 80% solids, Monsanto Company) and this mixture was in turn added with stirring to the above-described emulsion. The resulting mixture was placed in a container which was mounted in a room temperature water bath, continuous stirring was provided and the bath was heated to 65°C and maintained at this temperature for about two hours to initiate and complete encapsulation. Encapsulation was successfully completed in this time as indicated by the CF draw-down test, which is a method of determining capsule wall formation. The encapsulation emulsion containing all of the capsule-forming ingredients is coated onto a reactive colour developer hereafter referred to as («CF Paper») in accordance with the usual terminology in the art. A colour is formed by the reaction of the dye with the CF paper coating. Wall formation is demonstrated by the mitigation of the colour when the emulsion is coated at a later time and is measured by an opacimeter to give the reflectance of the coated area. When the opacimeter readings is approximately 60 or greater, the oil drop is assumed to be protected and the encapsulation is a success.

### Example 2

A solution was made of the following components:

20.0 grams PAA («Acrysol A-3», 25% solids)

16.7 grams PSA («Versa-TL 71», 30% solids)

213.0 grams water

This solution was then used to make microcapsules as in the procedure of Example 1. Although there was a slight amount of drop growth which resulted from the addition of the «Resimene 714», the observed drop size range both before and after the addition of the melamine resin could be described as about 15 microns and less.

### Example 3

Two solutions were made as follows:

### Solution A

30 grams PAA («Acrysol A-3», 25% solids)

170 grams water

### Solution B

1.67 grams PSA («Versa-TL 71», 30% solids)

3.33 grams water

Each of the solutions was adjusted to pH 4.0 with a 20% sodium hydroxide solution. Into 150 grams of Solution A were emulsified 180 grams of the chromogenic compound solution of Table I and Solution B was added incrementally during the emulsification process step. 25 grams of «Resimene 714», 80% solids, were mixed with the remainder of Solution A and the mixture added to the emulsion. During the addition of the «Resimene», a slight amount of growth of the emulsion drop size was observed. However, the amount of growth which occurred was not sufficient to adversely affect the performance of the resulting microcapsules in pressure-sensitive copying systems. The emulsion was placed with stirring in a water bath maintained at 55°C and capsule wall formation occurred between 30 and 45 minutes as indicated by the CF draw-down test.

### Example 4

The procedure of Example 1 was repeated except that the pH of the initial PAA/PSA solution was adjusted with triethanolamine and 24 grams methylated methylol melamine resin («Cymel 382»*, an 82% solids resin solution produced by American Cyanamid Co.) were employed as the starting material for capsule formation. Capsule wall formation was essentially complete within 2 hours as indicated by the CF draw-down test.

### Example 5

A solution was made of the following components:

32 grams PAA («Acrysol A-3», 25% solids)

40 grams PSA («Versa-TL 400»*, 5% solids; sodium salt of polystyrene sulphonic acid; molecular weight 500,000; National starch and Chemical Corp.)

178 grams water

The procedure of Example 1 was repeated using the above solution and the chromogenic compound solution of Table II to successfully produce capsules as indicated by the CF draw-down test.

### Example 6

A solution was made of the following components:

36 grams PAA («Acrysol A-1»*, 25% solids; molecular weight less than 50,000; Rohm and Haas Co.)

3 grams PSA («Versa-TL 71», 30% solids)

161 grams water

The procedure of Example 1 was repeated using 150 grams of the above solution and 180 grams of the chromogenic compound solution of Table II for the emulsification step to successfully produce capsules as indicated by the CF draw-down test.

### Example 7

A solution was made of the following components:

28 grams PAA («Acrysol A-5»*, 25% solids; molecular weight less than 300,000; Rohm and Haas Co.)
10 grams PSA («Versa-TL 71», 30% solids)
212 grams water

The procedure of Example 1 was repeated using the chromogenic compound solution of Table II and a water bath temperature of 55°C to successfully produce capsules as indicated by the CF draw-down test.

### Example 8

A solution was made of the following components:

28 grams PAA («Acrysol A-3», 25% solids)
10 grams PSA («Versa-TL 121»*, 30% solids; polystyrene sulphonic acid; molecular weight 120,000; National Starch and Chemical Corp.)
212 grams water

The procedure of Example 1 was repeated using the above solution and a water bath temperature of 65°C to successfully produce capsules in one hour as determined by the CF draw-down test.

### Example 9

A solution was made of the following components:

28 grams PAA («Acrysol A-3», 25% solids)
10 grams PSA («Versa-TL 71», 30% solids)
212 grams water
10 grams urea
1 gram resorcinol

The pH of the solution was adjusted to 3.5 with a 20% sodium hydroxide solution and into the adjusted solution were emulsified 180 grams of the chromogenic compound solution of Table I to yield a drop size range of about 15 microns and less. To the emulsion were added 27 grams of 37% formaldehyde and the resulting mixture was placed in a container which was mounted in a water bath maintained at 55°C, continuous stirring was provided and the stirring and heating were maintained for 17 hours to complete the encapsulation process.

In order to further or alternatively test the integrity of the microcapsule walls formed, some of the microcapsule suspensions resulting from the examples of the invention were formulated into coating compositions and coated on to paper to produce top sheets (hereafter referred to as «CB sheets» in accordance with the usual terminology in the art) for use in pressure-sensitive copying systems. The coating of the CB sheets included about 75 percent capsules, 18 percent wheat starch and 7 percent of gum binder such as, for example, the hydroxyethylether of corn starch or other water-soluble starch derivatives; and was made up by combining 100 parts of aqueous capsule slurry having 40 percent capsules, 125 parts of water, 10 parts of wheat starch and 40 parts of a 10 percent aqueous solution of the gum binder — all adjusted to about pH 9. The coating was cast using a wire-wound rod designed to lay a 20 pounds (9.07 Kg) per ream (3300 square feet; 304 m²) wet film coating (29.6 gm⁻²). These CB sheets were imaged in a Typewriter Intensity Test which involves placing a CB sheet and a CF sheet in coated face-to-coated face relation and applying pressure. The capsules of the CB sheet rupture and capsule-contained material is trasferred to and reacted with the acid component of the CF sheet to yield a colour.

A test associated with such capsule rupture and colour formation is Typewriter Intensity (TI) and TI values indicate ratios of reflectances — the reflectances of marks produced on the CF sheet by a typewriter striking two sheets together versus the paper's background reflectance. A high value indicates little colour development and a low value indicates good colour development.

$$TI = \frac{\text{Printed Character Reflectance}}{\text{Background Reflectance}} \times 100$$

The CB sheets of the present invention were also subjected to the Oven Storage Test. This is a related test concerning capsule quality, and is concerned with the degree of loss of ability of capsule-coated paper to produce transfer prints in a typewriter test after storage of the coated paper in an oven at a specified temperature for a specified time. It is useful to perform a routine typewriter imaging transfer test with a CB/CF couplet, placing the CB in a 95°C. oven for 18 hours and then reimaging the couplet after storage. This test has consistently shown that poor capsules will lose most or all of their ability to make a transfer print during such oven storage and that good capsules will withstand this storage with little or no loss in ability to give a print. The results of these tests, presented in Table III, indicate good capsule quality in all examples tested. (ITI is the initial TI, before oven storage).

*Table III*

| CB Sheet Made from Capsules of Example | CB Storage in 100°C Storage Time | ITI | Oven TI after Storage |
|---|---|---|---|
| 1 | 1 day | 56 | 57 |
| 2 | 1 day | 53 | 57 |
| 2 duplicate | 1 day | 53 | 58 |
| 3 | 3 days | 53 | 57 |
| 4 | 16 hours | 51 | 54 |
| 8 | 16 hours | 55 | 59 |
| 9 | 17 hours | 59 | 60 |
| 9 duplicate | 1 day | 59 | 61 |

### Comparative Examples

Five examples within the scope of the polystyrene sulphonic acid amount limitations of British Patent No. 2,062,570 were prepared.

### Example 10A
A solution made of the following components was adjusted to pH 4.0 with a 20% sodium hydroxide solution.

12.0 grams PAA    («Acrysol A-1»*, 25% solids)
25.0 grams PSA    («Versa-TL 71», 30% solids)
263.5 grams water

Into 200 grams of the above solution were emulsified 180 grams of the chromogenic compound solution of Table II to yield a drop size range of about 15 microns and less. To the remaining portion of the PAA/PSA solution were added 25 grams of partially methylated methylol melamine, «Resimene 714», 80% solids. The addition of «Resimene 714» caused a substantial growth of the oil drop size of the emulsion of the chromogenic compound solution. The resulting mixture was placed in a container which was mounted in a water bath maintained at 55°C, stirring was provided and the mixture was maintained at this temperature with stirring to initiate and complete encapsulation. The resulting capsule slurry had a substantially larger size than is desirable due to the emulsion oil drop growth encountered.

### Example 10B
A solution made of the following components was adjusted to pH 4.0 with a 20% sodium hydroxide solution.

8.0 grams PAA    («Acrysol A-3», 25% solids)
26.7 grams PSA    («Versa-TL 71», 30% solids)
215.3 grams water

Into 200 grams of the above solution were emulsified 180 grams of the chromogenic compound solution of Table I to yield a drop size range of about 15 microns and less. To the remaining portion of the PAA/PSA solution were added 25 grams of «Resimene 714», 80% solids. The addition of this mixture to the above-described emulsion caused very substantial growth of the oil drop size of the emulsion. Because the oil drop size range after «Resimene 714» addition was about 30 microns and less, the process was discontinued.

### Example 10C
A solution made of the following components was adjusted to pH 4.0 with a 20% sodium hydroxide solution.

2.0 grams PAA    («Acrysol A-3», 25% solids)
31.7 grams PSA    («Versa-TL 71», 30% solids)
216.3 grams water

The procedure of Example 10B was repeated using the above solution. The step of adding the solution containing the «Resimene 714» to the emulsion caused the emulsion to break into two layers and, therefore, the process was discontinued.

### Example 10D
A solution made of the following components was adjusted to pH 4.0 with a 20% sodium hydroxide solution.

33.3 grams PSA    («Versa-TL 71», 30% solids)
266.7 grams water

Into 200 grams of the above solution were emulsified 180 grams of the chromogenic compound solution of Table II to yield a drop size range of about 15 microns and less. To the remaining portion of the PSA solution were added 25 grams of partially methylated methylol melamine, «Resimene 714», 80% solids. This mixture, when added to the above-described emulsion, caused extreme drop growth, with formation of free oil. The process was discontinued.

### Example 10E
A solution made of the following components was adjusted to pH 4.0 with a 20% sodium hydroxide solution.

33.3 grams PSA    («Versa-TL 71», 30% solids)
266.7 grams water

To this solution were added 25.0 grams methylated methylol melamine («Resimene 714», 80% solids).

Into the above solution an attempt was made to emulsify 180 grams of the chromogenic compound solution of Table II. A stable emulsion could not be prepared, and, therefore, the process was discontinued.

Thus, comparative Examples 10A-E, containing, respectively, 71%, 80%, 95%, 100% and 100% PSA by weight of the PAA/PSA mixtures, all within the range taught in British Patent No. 2,062,570, because of emulsion instability either failed to produce capsules of acceptably small size or failed to produce capsules at all. The proportions of the claimed invention are critical to the properties of the novel process.

In order to compare the effect on the ability to obtain a satisfactory oil drop size resulting from the use of a PAA/SPSA mixture in the preferred range of PSA concentration with the use of PAA alone, the following experiments were performed.

### Example 11A
The procedure of Example 1 was repeated and the parameters of the emulsification stages in the blender were determined as follows:

| Steps | Total time at stage | RPM of emulsi- fication blender | Micro- scopically observed oil drop size |
|---|---|---|---|
| Emulsification stage 1 | 3 min | 4000 | About 35 microns and smaller |
| Emulsification stage 2 | 3 min | 5000 | About 20 microns and smaller |

*(continued)*

| Steps | Total time at stage | RPM of emulsification blender | Microscopically observed oil drop size |
|---|---|---|---|
| Emulsification stage 3 | 3 min | 6000 | About 15 microns and smaller |
| Addition of «Resimene 714» | — | — | About 15 microns and smaller |

### Example 11B

The procedure of Example 1 was repeated with the exception that the following solution was used in place of the PAA/PSA mixture.

40.0 grams PAA («Acrysol A-3», 25% solids)
210.0 grams water

The parameters of the emulsification stages in the blender were determined as follows:

| Steps | Total time at stage | RPM of emulsification blender | Microscopically observed oil drop size |
|---|---|---|---|
| Emulsification stage 1 | 3 min | 4000 | About 60 microns and smaller |
| Emulsification stage 2 | 3 min | 5000 | About 25 microns and smaller |
| Emulsification stage 3 | 3 min | 6000 | About 60 microns and smaller |
| Emulsification stage 4 | 3 min | 6800 | About 25 microns and smaller Many small drops |
| Emulsification stage 5 | 3 min | 7500 | About 25 microns and smaller Many small drops |
| Addition of «Resimene 714» | — | — | About 35 microns and smaller |

The procedure using PAA alone requires a longer emulsification time, shows a poorer drop size distribution, shows an inability to yield the preferred smaller oil drop size range and shows substantial oil drop growth upon the addition of aminoplast precondensate intended capsule wall materials.

**Claims**

1. A process for manufacturing minute capsules comprising the steps of
(a) establishing a dispersion of particles or droplets of a substantially insoluble capsule nucleus material in an aqueous manufacturing vehicle containing:
(i) a capsule wall precursor material selected from melamine and formaldehyde, methylol melamine, methylated methylol melamine, urea and formaldehyde, dimethylol urea or methylated dimethylol urea or any combination thereof, and
(ii) a mixture of poly(acrylic acid) and polystyrene sulphonic acid or a polystyrene sulphonic acid salt; and
(b) forming polymeric shells individually surrounding the particles of capsule nucleus material from the capsule wall precursor material by an in situ polymerization characterised in that the polystyrene sulphonic acid or salt is present in an amount in the range 6 to 50 percent by weight based on the weight of the mixture of the poly(acrylic acid) and the polystyrene sulphonic acid or salt.

2. A process as claimed in claim 1 characterized in that the amount of polystyrene sulphonic acid or salt is in the range of 20 to 40 percent.

3. A process as claimed in claim 2 characterized in that the amount of polystyrene sulphonic acid or salt is about 30 percent.

4. A process as claimed in any preceding claim characterized in that the polymerisation is conducted at a temperature in the range of 40°C to 95°C.

5. A process as claimed in claim 4 characterized in that the polymerisation is conducted at a temperature in the range of 50°C to 70°C.

6. A sheet material carrying minute capsules manufactured by a process as claimed in any preceding claim.

**Patentansprüche**

1. Verfahren zur Herstellung von Mikrokapseln mit den Stufen
(a) Bereitstellen einer Dispersion von Teilchen oder Tröpfchen eines im wesentlichen unlöslichen Kapselkernmaterials in einem wässrigen Arbeitsmedium, enthaltend:
(i) ein Kapselwandvorläufermaterial ausgewählt aus Melamin und Formaldehyd, Methylolmelamin, methyliertem Methylolmelamin, Harnstoff und Formaldehyd, Dimethylolharnstoff oder methyliertem Dimethylolharnstoff, oder irgendeiner Kombination davon, und

(ii) eine Mischung aus Polyacrylsäure und Polystyrolsulfonsäure oder einem Polystyrolsulfonsäuresalz; und

(b) Bildung polymerer Schalen, die die Teilchen des Kapselkernmaterials individuell umgeben, aus dem Kapselwandvorläufermaterial durch eine insitu-Polymerisation, dadurch gekennzeichnet, dass die Polystyrolsulfonsäure oder das Salz in einer Menge im Bereich von 6 bis 50 Gew.-% vorhanden ist, bezogen auf das Gewicht der Mischung der Polyacrylsäure und der Polystyrolsulfonsäure oder des Salzes.

2. Verfahren nach Anspruch 1, dadurch gekennzeichnet, dass die Menge an Polystyrolsulfonsäure oder des Salzes im Bereich von 20 bis 40% liegt.

3. Verfahren nach Anspruch 2, dadurch gekennzeichnet, dass die Menge der Polystyrolsulfonsäure oder des Salzes ca. 30% beträgt.

4. Verfahren nach einem der vorhergehenden Ansprüche, dadurch gekennzeichnet, dass die Polymerisation bei einer Temperatur im Bereich von 40°C bis 95°C durchgeführt wird.

5. Verfahren nach Anspruch 4, dadurch gekennzeichnet, dass die Polymerisation bei einer Temperatur im Bereich von 50°C bis 70°C durchgeführt wird.

6. Blattmaterial, dadurch gekennzeichnet, dass es Mikrokapseln enthält, die nach einem Verfahren gemäss einem der vorhergehenden Ansprüche hergestellt sind.


**Revendications**

1. Procédé de fabrication de minuscules capsules comprenant les étapes consistant à:
(a) former une dispersion de particules ou de gouttelettes d'une matière de noyau de capsule pratiquement insoluble dans un véhicule de fabrication aqueux contenant:
(i) une matière précurseur des parois des capsules choisie parmi la mélamine et le formaldéhyde, la méthylol mélamine, la méthylol mélamine méthylée, l'urée et le formaldéhyde, la diméthylol urée ou la diméthylol urée méthylée ou n'importe quelle combinaison de ceux-ci, et
(ii) un mélange d'acide polyacrylique et d'acide polystyrène sulfonique ou d'un sel de l'acide polystyrène sulfonique; et
(b) former des coques polymères entourant individuellement les particules de la matière de noyau des capsules à partir de la matière précurseur des parois des capsules par une polymérisation in situ, caractérisé en ce que l'acide polystyrène sulfonique ou son sel est présent dans une proportion dans l'intervalle de 5 à 50% en poids par rapport au poids du mélange de l'acide polyacrylique et de l'acide polystyrène sulfonique ou de son sel.

2. Procédé selon la revendication 1, caractérisé en ce que la proportion d'acide polystyrène sulfonique ou de son sel est dans l'intervalle de 20 à 40%.

3. Procédé selon la revendication 2, caractérisé en ce que la quantité d'acide polystyrène sulfonique ou de son sel est d'environ 30%.

4. Procédé selon l'une quelconque des revendications précédentes, caractérisé en ce que la polymérisation est effectuée à une température dans l'intervalle de 40°C à 95°C.

5. Procédé selon la revendication 4, caractérisé en ce que la polymérisation est effectuée à une température dans l'intervalle de 50°C à 70°C.

6. Matière en feuille portant de minuscules capsules fabriquée par un procédé selon l'une quelconque des revendications précédentes.